**Europäisches Patentamt**

**European Patent Office**

**Office européen des brevets**

(19)

(11) Publication number : **0 302 842 B1**

(12)

# EUROPEAN PATENT SPECIFICATION

(45) Date of publication of patent specification :
**24.06.92 Bulletin 92/26**

(51) Int. Cl.⁵ : **B65D 1/14,** B65D 21/02,
B62B 3/10

(21) Application number : **88830337.7**

(22) Date of filing : **02.08.88**

(54) A system of hardware for the collection of hospital refuse.

(30) Priority : **04.08.87 IT 359187**

(43) Date of publication of application :
**08.02.89 Bulletin 89/06**

(45) Publication of the grant of the patent :
**24.06.92 Bulletin 92/26**

(84) Designated Contracting States :
**AT BE CH DE ES FR GB GR LI LU NL SE**

(56) References cited :
**DE-A- 3 505 892**
**FR-A- 1 427 879**

(56) References cited :
**GB-A- 210 368**
**GB-A- 971 205**
**US-A- 1 404 113**
**US-A- 2 667 320**

(73) Proprietor : **MENGOZZI S.R.L.**
**Via Boldrini, 14**
**I-40121 Bologna (IT)**

(72) Inventor : **Mengozzi, Enzo**
**Via Ilario Tabarri 8**
**I-47100 Forli' (IT)**

(74) Representative : **Lanzoni, Luciano**
**c/o BUGNION S.p.A. Via dei Mille, 19**
**I-40121 Bologna (IT)**

**EP 0 302 842 B1**

## Description

The invention relates to an apparatus for the collection of hospital refuse, comprising a container, the base and lid of which are embodied with matching profiles that fit together when a number of containers are stacked one on top of another in such a way as to create a recess between the base of one container and the lid of a container beneath, for the accomodation of handle associated with the lid and comprising fasteners that serve to clamp and retain the lid against the top edge of the relative container hermetically.

It is well known that the accumulation, collection and disposal of hospital refuse is a cycle beset by particular problems, in as much as steps must be taken throughout the entire handling process to avoid any risk of illness through infection. Detailed Legal directives exist stating that refuse of this nature should be collected in containers having a prescribed strength, and a fastening system such as can guarantee that their contents will not be spilled accidentally.

In compliance with there requirements, the current practise is to manufacture disposable containers in self-extinguishing material (plasticated cardboard or suitably formulated resins), which can be sealed hermetically and are destroyed together with their contents by incineration. Containers of the type in question are generally easily stacked, as the section of the base of the single container is smaller than that of its lid and because the base and lid of containers embodies matching profiles that fit together when a number of containers are stacked one on another as to create a recess, positioned between the base of one container and a lid of a container beneath for the accomodation of handle normally associated with the lid. An embodiment is known, in which said containers also comprising fastening systems that are embodied in the container and in its lid in such a way, after the accumulation of refuse and closing of container, this one can open only by rupture of its parts. This, of course, permits to use the container once only (see DE-A-3 505 892).

A first, serious drawback encountered with this conventional type of embodiment is that, whatever the individual design and the material utilized in construction, the efficiency of the hermetic seal at least for the containers which are fabricated by plasticated cardboard, is generally not such as to ensure a faultlessly tight fit, especially in the event of the container being overturned.

A second drawback stems from the fact that the use of disposable containers has an effect of increasing the workload on incineration centres, and tends also to flout the ecological principle, by now widely accepted in most developed countries, that waste attributable to the use of disposable wrappings and containers should be curbed.

A third drawback with disposable type containers, affecting collection and disposal operations, is that they are fashioned from a material of limited strength, which in turn limits their capacity, and do not stack to best possible advantage in terms of exploiting available space, by reason of the base being smaller in section than the lid.

A fourth drawback derives from the amount of energy required to incinerate disposable containers; in effect, this becomes yet another loss, in terms of cost, incurred in the overall process of handling hospital refuse.

It is also known that exist cylindrical metal containers comprising covers, that are combined with carts for their transportation. The main drawback of said containers consists in that they are not stacking one on top of another. Moreover the supporting carts are made by interconnected beam elements having several shapes and sizes that make their production very expensive (see US-A-2 667 320).

Accordingly, the object of the invention is one of overcoming all the drawbacks mentioned above, thus rendering the operations of collecting and disposing of special refuse more economical, whilst observing health and hygiene regulations to the letter and safeguarding the environment.

The stated object is realized, comprehensively, with an apparatus as characterized in the appended claims, which comprises a special container fashioned from steel, hence reusable, and a relative trolley; the structure of containers according to the invention is optimized from the point of view of stacking, fully in line with health and hygiene regulations, and advantageous ecologically and economically; moreover, the use of steel permits of obtaining a highly efficient hermetic seal.

A further advantage of the invention is that there are no emission problems, and no losses incurred by waste.

The fact the containers are reusable evidently dictates the necessity for a washing, disinfection and sterilization process, though when compared to a system using disposable containers, the overall cost of such an operation, in terms of energy per unit weight of refuse destroyed, is far lower, and it is thus the case that containers embodied according to the invention are the more economical.

The invention will now be described in detail, by way of example, with the aid of the accompanying drawings, in which:

– fig 1 is a perspective of the invention, viewed in its entirety;

– fig 2 is a perspective showing certain details of the embodiment of the single container that permit of stacking containers one on top of another;

– fig 3 shows certain of the details illustrated in fig 2, viewed in section taken through the axis of the container.

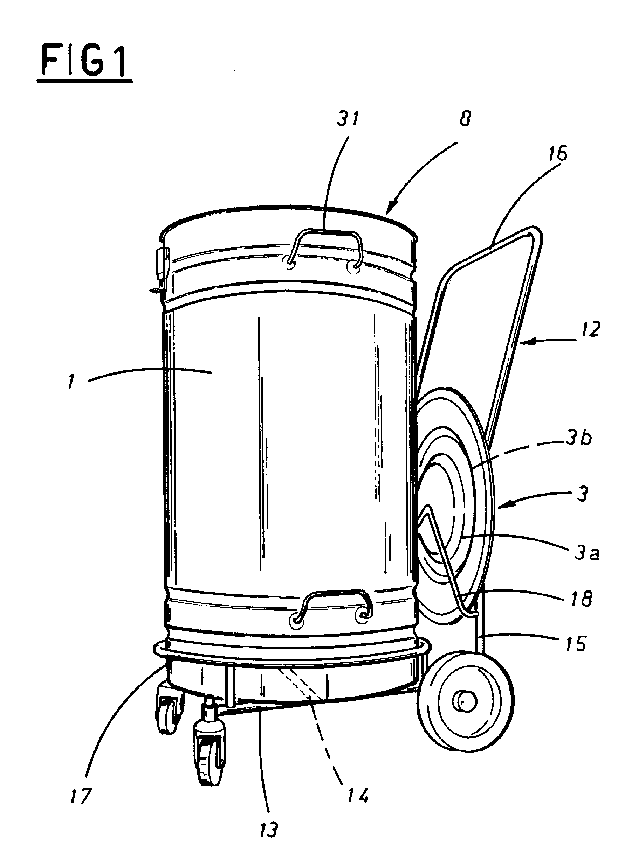

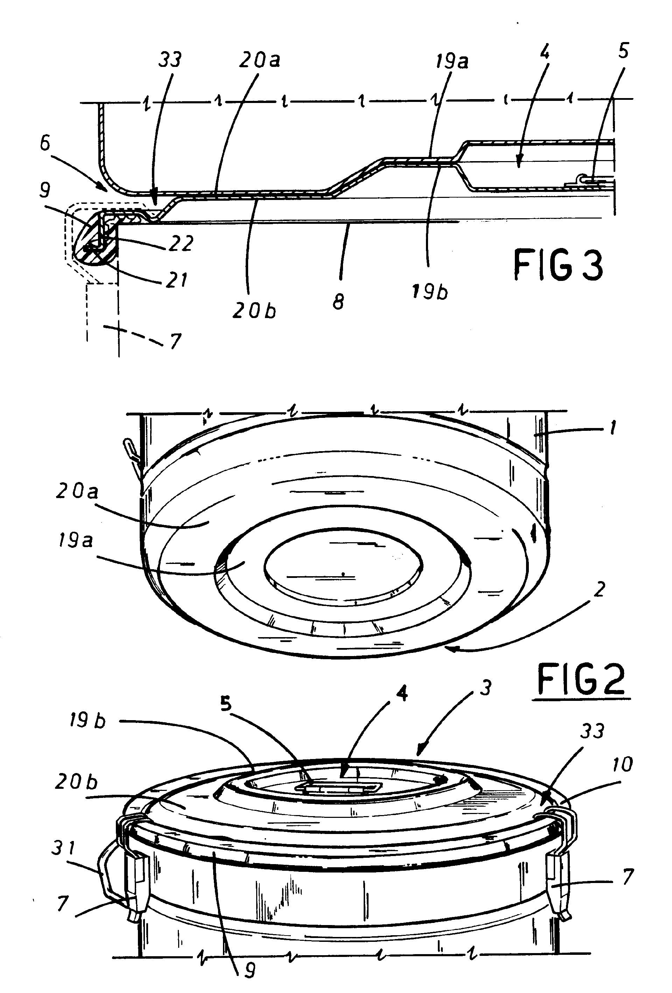

Referring to figs 1 and 2, it will be seen that the invention substantially comprises:

– a container 1 of cylindrical shape fashioned in metal, preferably stainless steel, which exhibits a base 2 and a lid 3 with matching profiles and is capable of being hermetically sealed;

– a trolley 12 designed for easy transportation both of the container 1, open and ready for use, and of its lid 3.

The base 2 of the container 1 is embodied with a central concave section 19a of frusto-conical shape surrounded by a flat peripheral band 20a (see figs 2 and 3).

In like fashion, the lid 3 of the container exhibits a central convex section 19b that is insertable into the concave section 19a of the base 2 of another container; thus, when several containers are stacked on top of one other, there is no risk of any single one sliding away at right angles to its axis.

4 denotes a recess formed in the central section 19b of the lid 3 to accommodate a handle, denoted 5; the dimensions of the recess 4 will be such as to ensure that the handle 5 is freely encompassed, thereby avoiding any possible contact with the base 2 of a container that may be stacked above.

In like manner to the base 2 of the container, the central section 19b of the lid 3 is surrounded by a flat peripheral band 20b designed to breast with the flat peripheral band 20a offered by the base 2 of a container; the lid also presents an outer rim 10 of polygonal section which is positioned lower than the band 20b, such that when the containers are stacked, a peripheral void 6 is created in combination with the band 20a of the base 2 of the container above (see fig 3), affording access for the fitment of fasteners 7 that serve to clamp and retain the lid 3 against the top edge 8 of the container in a fully hermetic fit.

The fasteners 7 appear in the example illustrated as clips with uncinate ends that engage positively at any given point in a peripheral circular groove 33 afforded by the top of the lid 3.

The outer rim 10 of the lid exhibits a cross section of 'L' shape, the horizontal member 21 of which is masked entirely on both faces by a single rubber seal 9; the seal also covers the vertical member 22 of the 'L', but extends farther over its internal face than over its external face, in order to ensure a fully hermetic fit when the lid is secured to the container by remaining compressed between the rim 10 and the top edge 8, which is suitably flared to the same purpose.

Given the embodiment of the fasteners 7, and their uniform distribution around the periphery of the container 1, there will be no risk of the contents of the container spilling out, even in the event of the container itself becoming overturned.

The container 1 is further provided with carrying handles 31 at either side, for easy lifting and stacking.

The trolley 12, illustrated in fig 1, is fashioned in metal from a single length of hollow section, bent in such a way as to create:

– two horizontal rails 13 at bottom, interconnected by cross braces 14 and serving as a platform for the base 2 of the container;

– two uprights 15 that rise together, vertically at first, then angled to the rear, before converging ultimately and joining to create a horizontal cross rail 16 that serves as a handlebar.

The trolley 12 further comprises a cage element 17 located above and attached rigidly to the horizontal rails 13, which is circular to match the shape of the container 1, and serves to inhibit transverse movement of a container when on the platform.

The vertical stretches of the two uprights 15 are interconnected transversely by a bar 18 that is bent in such a way as to combine with the uprights 15 in creating a holder for the lid 3; it will be seen from fig 1, in fact, that the internal surface 3a and the external surface 3b of the lid are checked on either side.

## Claims

1. An apparatus for the collection of hospital refuse, comprising in combination

– a container (1), the base (2) and lid (3) of which are embodied with matching profiles that fit together when a number of containers are stacked one on top of another in such a way as to create a recess (4) between the base (2) of one container (1) and the lid (3) of a container (1) beneath, for the accomodation of handle (5) associated with the lid (3);

– fasteners (7) that serve to clamp and retain the lid (3) against the top edge (8) of the relative container (1) hermetically;

said apparatus characterized in that it also comprises in combination

– a peripheral void (6), positioned between the lid (3) and the base (2) of the container (1) stacked just above and created by said matching profiles along the outer rim (10) of the lid (3), which is specially profiled and is positioned lower than the areas of contact of the lid (3) and the base (2), the peripheral void (6) affording access for the fitment of said fasteners (7);

– a seal (9) that acts in combination with the outer rim (10) of the lid (3) and the fasteners (7) to ensure the hermetic seal of the container (1):

– a trolley (12) for transportation of the container (1), fabricated from a single length of hollow section material bent in such a way as to create two horizontal rails (13) at bottom interconnected by cross braces (14) and serving as a platform for the base (2) of the container (1), and two uprights (15) that rise to a given height, vertically at first, then angled to the rear, before converging and joining to create a horizontal cross rail (16) that serve as a handlebar, and comprising a cage (17) element located above and attached rigidly to the horizontal rails (13), which matches the shape of the container (1) and serves to inhibit any transverse movement of a container (1) occupying the platform, and a transversely disposed bar (18) that interconnects the vertical stretches of the uprights (15) and is bent in such a way that the bar and the uprights (15) create a holder for the lid (3) by supporting its internal surface (3a) on the one hand, and its external surface (3b) on the other.

2. An apparatus as in claim 1, wherein the outer rim (10) of the lid exhibits a cross section of 'L' shape, the horizontal member (21) of which is masked entirely on both faces by a single rubber seal (9) that also covers the vertical member (22) of the 'L', extending farther over the internal face than over the external in such a way as to produce a hermetic action on fitment of the lid by remaining compressed between the rim (10) and the top edge (8) of the container (1), which is suitably flared to the end of ensuring the hermetic sealing action.

3. An apparatus as in claim 1, wherein the lid (3) of the container (1) affords an upward facing circular peripheral groove (33) designed to accommodate the uncinate ends of the fasteners (7).

## Patentansprüche

1. Metallische Vorrichtung zum Sammeln von Krankenhausabfall, in Kombination enthaltend:
– Einen Behälter (1), dessen Boden (2) und Deckel (3) mit passrechten Profilen versehen sind, die sich miteinander verbinden, wenn eine Anzahl von Behältern einer über dem anderen gestapelt werden, und zwar auf solche Weise, dass zwischen dem Boden (2) des einen Behälters und dem Deckel (3) des anderen Behälters (1) darunter eine Vertiefung (4) zur Aufnahme des Griffes (4) gebildet wird, der mit dem Deckel (3) verbunden ist;
– Befestigungsmittel (7), die dazu dienen, den Deckel (3) gegen den oberen Rand (8) des entsprechenden Behälters (1) hermetisch anzuklemmen und zu halten;
**dadurch gekennzeichnet**, dass die genannte Vorrichtung ebenfalls in Kombination wie folgt enthält:
– Einen umlaufenden Raum (6), angeordnet zwischen dem Deckel (3) und dem Boden (2) der übereinander gestapelten Behälter (1) und gebildet durch die genannten passrechten Profile entlang dem äusseren Rand (10) des Deckels (3), welcher speziell ausgebildet und tiefer angeordnet ist als die Kontaktbereiche zwischen dem Deckel (3) und dem Boden (2), wobei dieser umlaufende Raum (6) den Zugang zum Anbringen der genannten Befestigungsmittel (7) erlaubt
– eine Dichtung (9), die zusammen mit dem äusseren Rand (10) des Deckels (3) und den Befestigungsmitteln (7) wirkt, um das hermetische Abdichten des Behälters (1) zu gewährleisten;
– einen Karren (12) für den Transport des Behälters (1), hergestellt aus einem einzigen Hohlprofil, welches so gebogen ist, dass am Boden zwei horizontale Schienen (13) gebildet werden, die durch Querstreben (14) miteinander verbunden sind und als Plattform für den Boden (2) des Behälters (1) dienen, sowie zwei aufrechte Streben (15), die zunächst bis zu einer bestimmten Höhe vertikal verlaufen und dann nach hinten abgewinkelt sind bevor sie zusammengehen und zur Herstellung einer horizontalen Querstrebe (16) miteinander verbunden werden, die dann als Handgriff dient, und enthaltend ein Käfigelement (17), das auf den horizontalen Streben (13) angeordnet und an diesen starr befestigt ist, und welches der Form des Behälters (1) angepasst und dazu bestimmt ist, jede Querverschiebung eines die Plattform belegenden Behälters (1) zu verhindern, sowie eine quer angeordnete Stange (18), welche die vertikalen aufrechten Streben (15) miteinander verbindet und auf solche Weise gebogen ist, dass die Stange und die aufrechten Streben (15) zusammen eine Halterung für den Deckel (3) bilden, wobei letzterer mit seiner Innenfläche (3a) von der einen Seite und mit seiner Aussenfläche (3b) von der anderen Seite gehalten wird.

2. Vorrichtung nach patentanspruch 1, **dadurch gekennzeichnet**, dass der äussere Rand (10) des Deckels einen L-förmigen Querschnitt aufweist, dessen horizontaler Teil (21) auf beiden Seiten vollständig durch eine einzige Gummidichtung (9) verdeckt ist, die auch den vertikalen Teil (22) des "L"s mit abdeckt, wobei sich letztere weiter über die innenliegende als über die aussenliegende Fläche erstreckt, so dass eine hermetische Dichtwirkung bei der Befestigung des Deckels erzeugt wird, und zwar durch das Zusammenpressen zwischen dem Rand (10) und der oberen Kante (8) des Behälters (1), die in geeigneter Weise ausgebildet ist, umd die hermetische Dichtwirkung zu gewährleisten.

3. Vorrichtung nach patentanspruch 1, **dadurch gekennzeichnet**, dass der Deckel (3) des Behälters (1) eine nach oben zeigende umlaufende Rille (33) aufweist, bestimmt zur Aufnahme der hakenförmig ausgebildeten Enden der Befestigungsmittel (7).

## Revendications

1. Dispositif métallique pour la collecte de déchets d'hôpital, comprenant:

– un récipient (1), dont la base (2) et le couvercle (3) sont pourvus de profils de forme réciproquement conjuguée qui s'emboîtent l'un dans l'autre lors de l'empilage de plusieurs récipients superposés, de manière à créer une cavité (4) entre la base (2) d'un récipient (1) et le couvercle (3) du récipient (1) disposé au-dessous pour le logement d'une poignée de prise (5) associée au couvercle (3);

– des éléments de fixation (7) qui servent à serrer et à retenir de manière étanche le couvercle (3) contre le bord supérieur (D) du récipient respectif (1);

ledit dispositif étant caractérisé en ce qu'il comporte également en combinaison:

– un espace vide périphérique (6) situe entre le couvercle (3) et la base (2) du récipient (1) empilé immédiatement au-dessus et créé par lesdits profils qui s'épousent, le long du rebord extérieur (10) du couvercle (3) lequel est conformé de manière spéciale et est disposé plus bas que les zones de contact entre le couvercle (3) et la base (2), l'espace vide périphérique (6) permettant l'accès pour l'ajustement desdits éléments de fixation (7);

– un joint d'étanchéité (9) qui agit en combinaison avec le rebord extérieur (10) du couvercle (3) et les éléments de fixation (7) dans le but d'assurer l'étanchéité du récipient (1);

– un chariot (12) destiné à transporter le récipient (1), obtenu d'une seule pièce de profilé tubulaire creux replié de manière à créer deux barres horizontales (13) reliées entre elles au fond par des entretoises (14) et faisant fonction de plate-forme pour la base (2) du récipient (1) et deux montants (15) qui s'élèvent jusqu'à une hauteur donnée d'abord verticalement, ensuite incurvés vers la partie arrière, avant de converger et s'unir à former une barre transversale horizontale (16) qui sert de guidon, et comportant un élément faisant fonction de cage disposé au dessus des barres horizontales (13) et rigidement attaché à celles-ci, lequel est de forme épousant celle du récipient (1) et sert à empêcher tout mouvement transversal d'un récipient (1) occupant la plate-forme, et une tige (18) disposée transversalement et reliant entre eux les tronçons verticaux des montants (15), cette tige étant coudée de manière à créer ensemble avec ces montants (15) un support pour le couvercle (3), en mesure de supporter d'une part sa surface interne (3a) et d'autre part sa surface externe (3b).

2. Dispositif selon la revendication 1, caractérisé en ce que le rebord extérieur (10) du couvercle présente une section transversale en forme de "L", dont la branche horizontale (21) est recouverte entièrement sur les deux faces d'un joint unique de caoutchouc recouvrant également la branche verticale (22) de la conformation en "L" et s'étendant davantage sur la face intérieure que sur la face extérieure de manière à produire une action hermétique lors de la mise en place dudit couvercle, du fait qu'il reste serré entre le rebord (10) et le bord supérieur (8) du récipient (1) qui est convenablement évasé dans le but d'assurer une fermeture étanche.

3. Dispositif selon la revendication 1, caractérisé en ce que le couvercle (3) du récipient (1) présente une rainure périphérique circulaire (33) exposée vers le haut, destinée à loger les extrémités en croc des éléments de fixation (7).

# FIG 1

FIG 3

FIG2